# EUROPEAN PATENT APPLICATION

(11) **EP 4 340 092 A1**
(43) Date of publication of application: **20.03.2024**
(21) Application number: 22807233.6
(22) Date of filing: 25.03.2022
(51) Int. Cl.: H01M 10/0562, H01M 10/0585, H01M 50/531

(54) **BATTERY AND METHOD FOR PRODUCING BATTERY**

(30) Priority: 10.05.2021 JP 2021080037
(71) Applicant: Panasonic Intellectual Property Management Co., Ltd., Kadoma-shi, Osaka 571-0057 (JP)
(72) Inventor: HONDA, Kazuyoshi, Tokyo 103-0022 (JP); KOGA, Eiichi, Tokyo 103-0022 (JP); HIRANO, Koichi, Tokyo 103-0022 (JP); KAWASE, Akira, Tokyo 103-0022 (JP); MORIOKA, Kazuhiro, Tokyo 103-0022 (JP)
(74) Representative: Eisenführ Speiser
(86) International application number: PCT/JP2022/014306
(87) International publication number: WO 2022/239528

(57) **Abstract**

A battery (1) includes: a power generation element (10) including battery cells (100) each of which includes an electrode layer (110), a counter-electrode layer (120), and a solid electrolyte layer (130) located between the electrode layer (110) and the counter-electrode layer (120), and which (100) are electrically connected in parallel and stacked; an electrode insulating layer (21) covering an electrode layer (110) at a side surface (11) of the power generation element (10); and a counter-electrode terminal (31) covering the side surface (11) and the electrode insulating layer (21), and electrically connected to a counter-electrode layer (120). The power generation element (10) includes: a parallel unit (10A) that includes first battery cells among the battery cells (100) and has both ends in a stacking direction at each of which a counter-electrode layer (120) is located; and a parallel unit (10B) that includes second battery cells among the battery cells (100), has both ends in the stacking direction at each of which an electrode layer (110) is located, and is stacked on the parallel unit (10A).

## Description

### [Technical Field]

The present disclosure relates to a battery and a method of manufacturing a battery.

### [Background Art]

In recent years, a battery formed by connecting multiple series-connected battery cells in parallel has been known (for example, see Patent Literature (PTL) 1 and PTL 2).

### [Citation List]

### [Patent Literature]

[PTL 1] Japanese Unexamined Patent Application Publication No. 2013-120717
[PTL 2] Japanese Unexamined Patent Application Publication No. 2008-198492

### [Summary of Invention]

### [Technical Problem]

There is a demand for the further improvement of the battery property of the conventional battery.

In view of this, the present disclosure provides a high-performance battery and a method of manufacturing the battery.

### [Solution to Problem]

A battery according to one aspect of the present disclosure includes: a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked; a first insulating member covering an electrode layer among the electrode layers at a first side surface of the power generation element; and a first terminal electrode covering the first side surface and the first insulating member, and electrically connected to a counter-electrode layer among the counter-electrode layers. The power generation element includes: a first parallel unit that includes first battery cells among the plurality of battery cells and has both ends in a stacking direction at each of which a corresponding one of the counter-electrode layers is located; and a second parallel unit that includes second battery cells among the plurality of battery cells, has both ends in the stacking direction at each of which a corresponding one of the electrode layers is located, and is stacked on the first parallel unit.

A method of manufacturing a battery according to one aspect of the present disclosure includes: (i) preparing a plurality of battery cells each of which includes an electrode layer, a counter-electrode layer, and a solid electrolyte layer located between the electrode layer and the counter-electrode layer; (ii) forming a layered body of the plurality of battery cells stacked in turn so that an order of arrangement of the electrode layer, the counter-electrode layer, and the solid electrolyte layer is alternately reversed; (iii) covering an electrode layer among the electrode layers with an insulating member at one side surface of the layered body; and (iv) covering the one side surface and the insulating member with a terminal electrode electrically connected to a counter-electrode layer among the counter-electrode layers. Step (ii) includes forming: a first parallel unit that includes first battery cells among the plurality of battery cells and has both ends in a stacking direction at each of which a corresponding one of the counter-electrode layers is located; and a second parallel unit that includes second battery cells among the plurality of battery cells, has both ends in the stacking direction at each of which a corresponding one of the electrode layers is located, and is stacked on the first parallel unit.

### [Advantageous Effects of Invention]

According to the present disclosure, it is possible to provide a high-performance battery and a method of manufacturing the battery.

### [Brief Description of Drawings]

[FIG. 1]

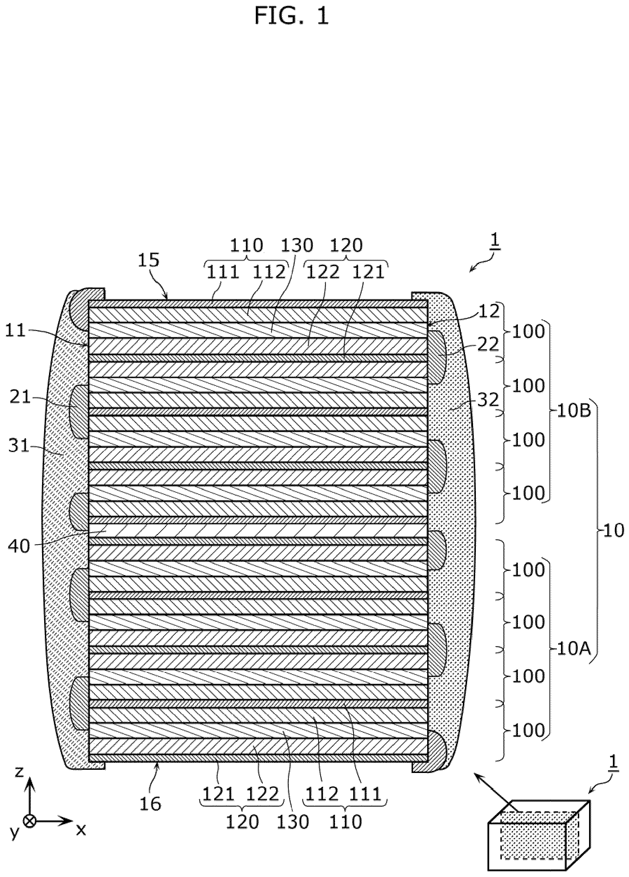

   FIG. 1 is a cross-sectional view illustrating a cross-sectional configuration of a battery according to Embodiment 1.
[FIG. 2]

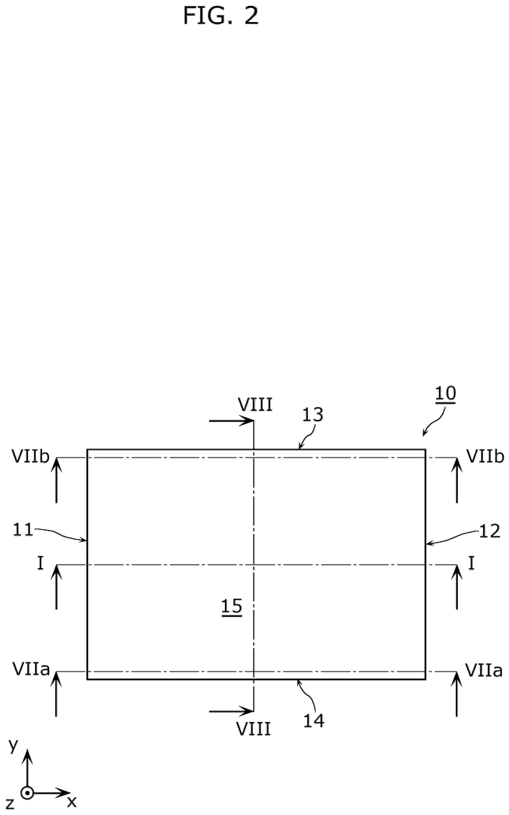

   FIG. 2 is a top view of a power generation element of the battery according to Embodiment 1.
[FIG. 3A]

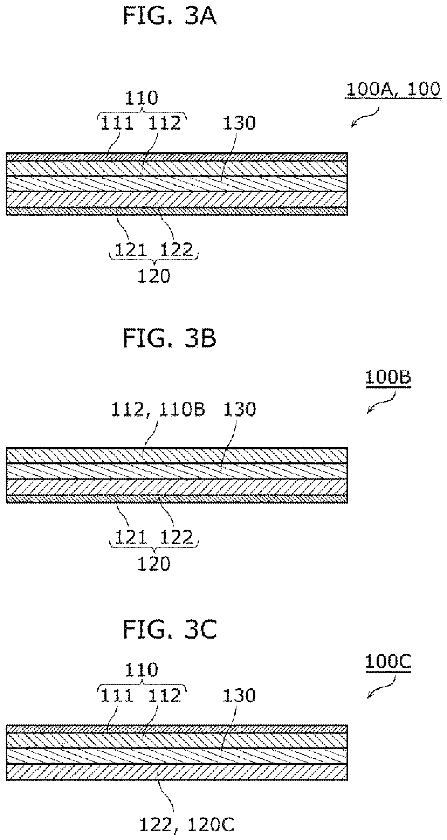

   FIG. 3A is a cross-sectional view of an example of a battery cell included in the power generation element according to Embodiment 1.
[FIG. 3B]
   FIG. 3B is a cross-sectional view of another example of the battery cell included in the power generation element according to Embodiment 1.
[FIG. 3C]
   FIG. 3C is a cross-sectional view of another example of the battery cell included in the power generation element according to Embodiment 1.
[FIG. 4]

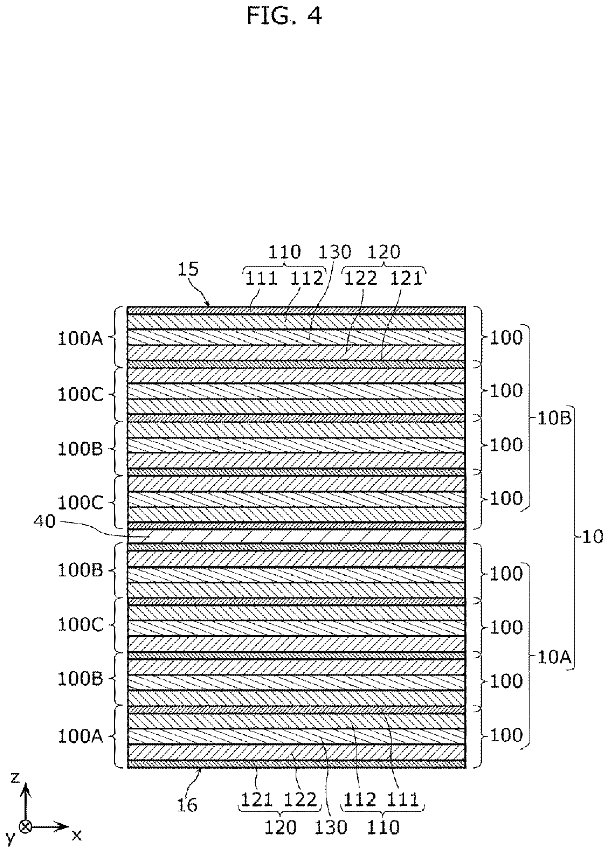

   FIG. 4 is a cross-sectional view of an insulating layer and the power generation element according to Embodiment 1.
[FIG. 5]

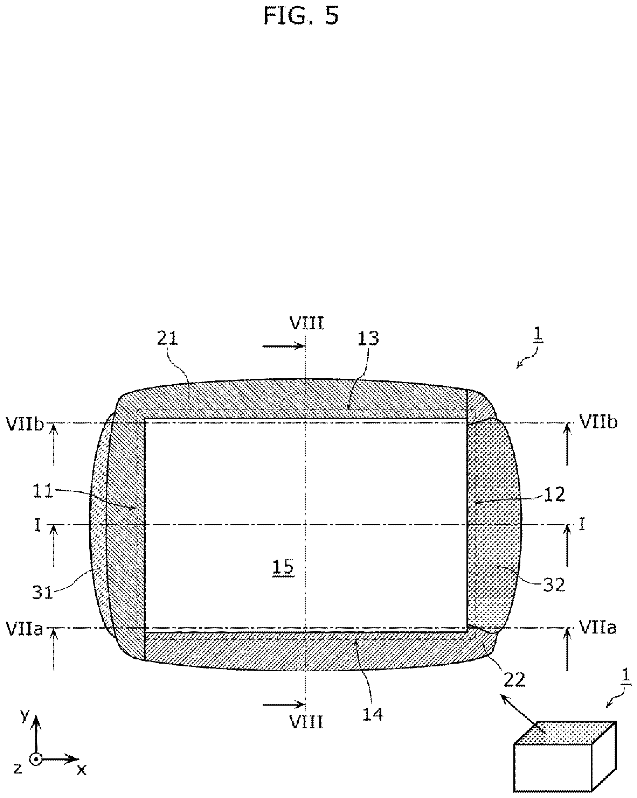

   FIG. 5 is a top view of the battery according to Embodiment 1.
[FIG. 6]

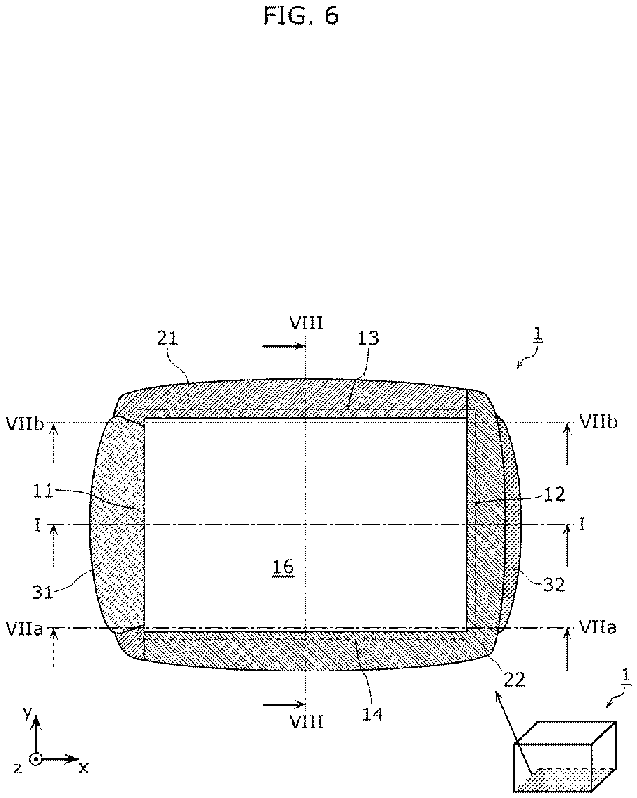

   FIG. 6 is a plan view of a bottom surface of the battery according to Embodiment 1 when viewed from above through a transparent top surface.
[FIG. 7]

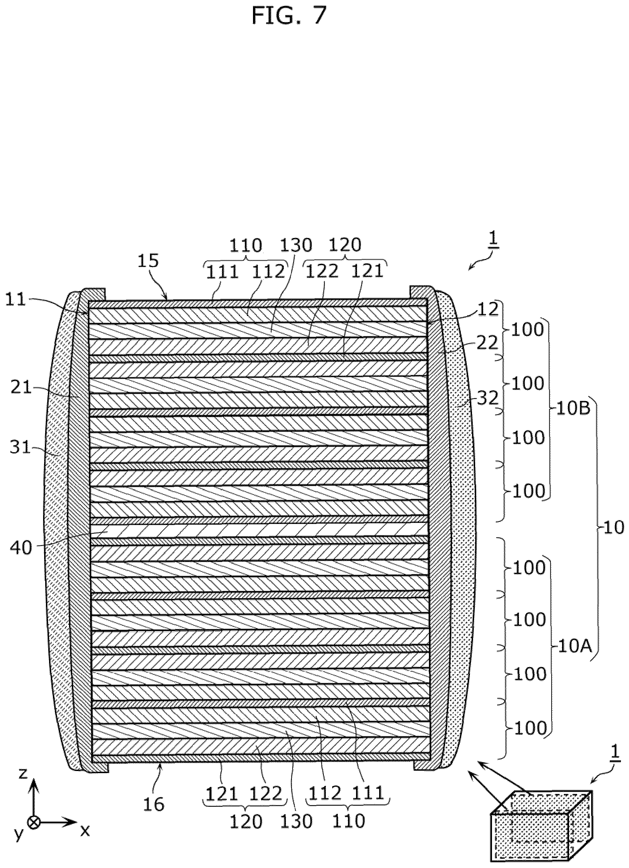

   FIG. 7 is a cross-sectional view illustrating a cross-sectional configuration of the battery taken along line Vlla-Vlla and line Vllb-Vllb in FIG. 2, FIG. 5, or FIG. 6.
[FIG. 8]

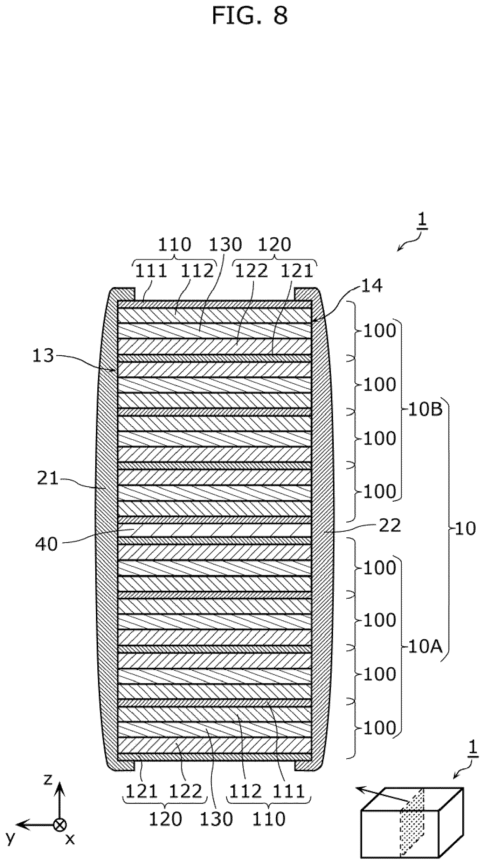

   FIG. 8 is a cross-sectional view illustrating a cross-sectional configuration of the battery taken along line VIII-VIII in FIG. 2, FIG. 5, or FIG. 6.
[FIG. 9]

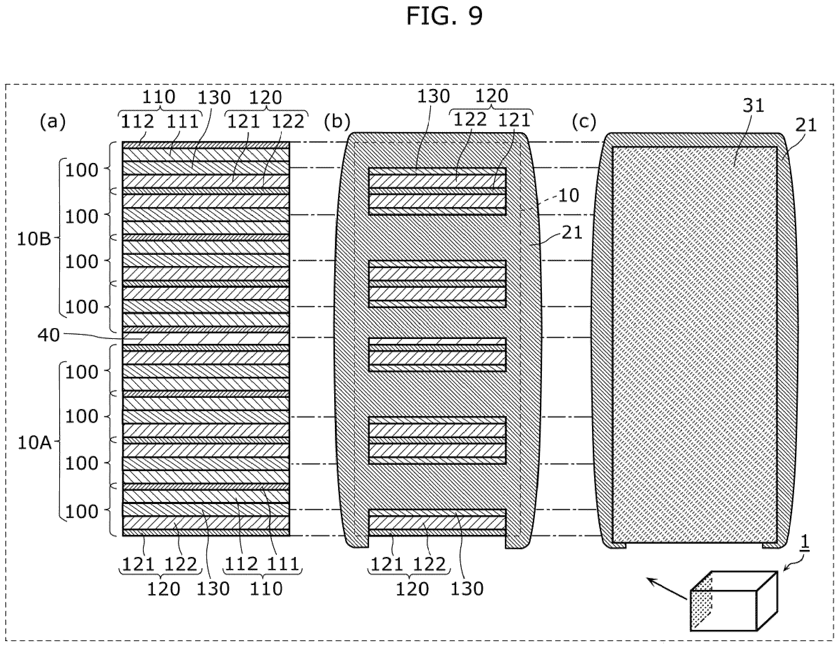

   FIG. 9 is a side view illustrating a positional relationship between the first side surface of the power generation element and an electrode insulating layer and a counter-electrode terminal which are formed on the first side surface, according to Embodiment 1.
[FIG. 10]

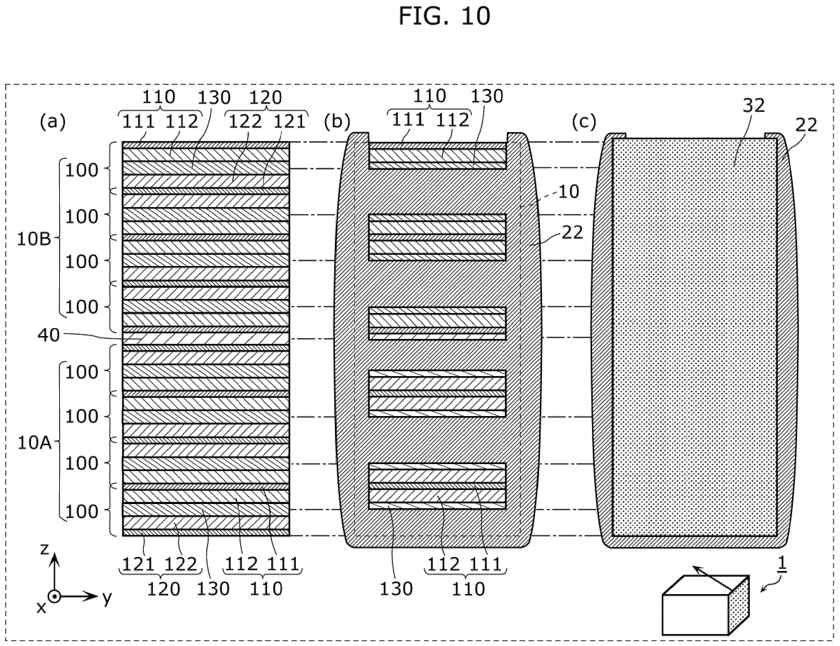

   FIG. 10 is a side view illustrating a positional relationship between the second side surface of the power generation element and a counter-electrode insulating layer and an electrode terminal which are formed on the second side surface, according to Embodiment 1.
[FIG. 11]

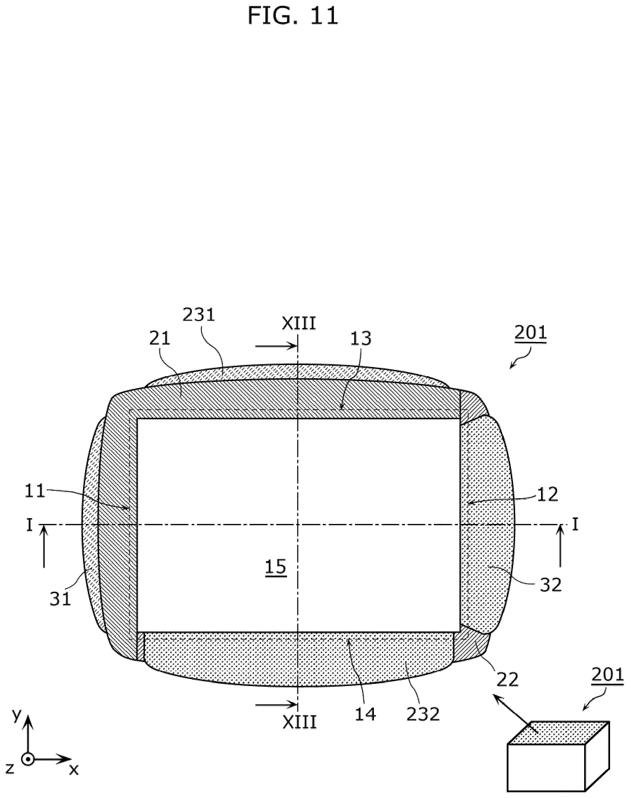

   FIG. 11 is a top view of a battery according to Embodiment 2.
[FIG. 12]

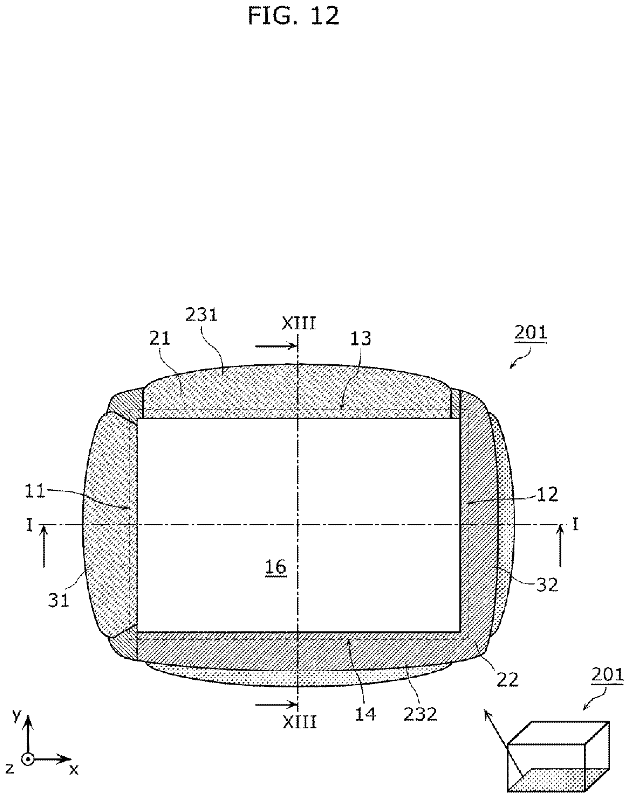

   FIG. 12 is a plan view of a bottom surface of the battery according to Embodiment 2 when viewed from above through a transparent top surface.
[FIG. 13]

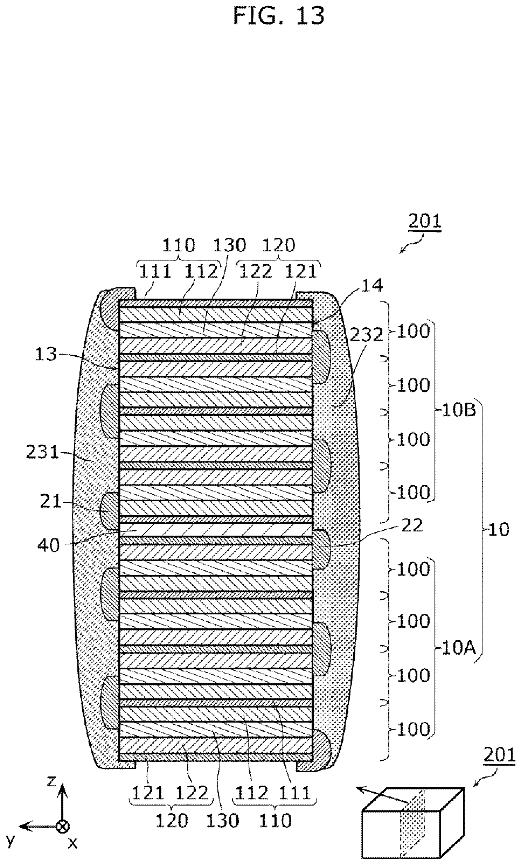

   FIG. 13 is a cross-sectional view illustrating a cross-sectional configuration of the battery according to Embodiment 2.
[FIG. 14]

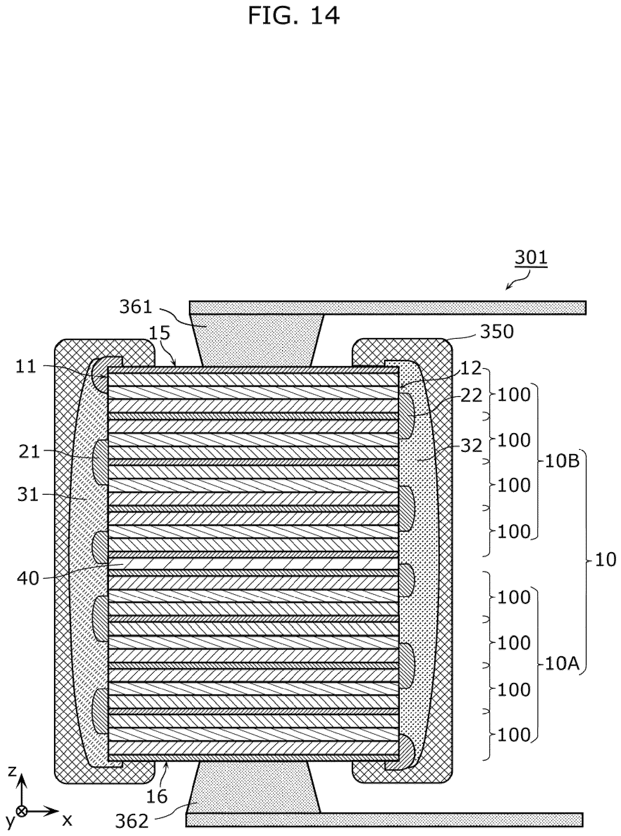

   FIG. 14 is a cross-sectional view illustrating a cross-sectional configuration of the battery according to Embodiment 3.
[FIG. 15]

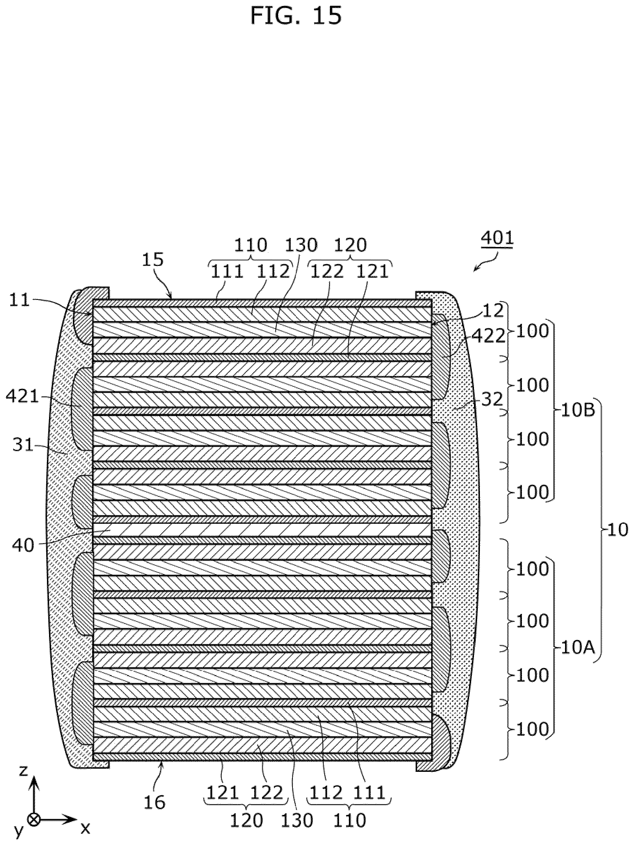

   FIG. 15 is a cross-sectional view illustrating a cross-sectional configuration of a battery according to a variation.
[FIG. 16]

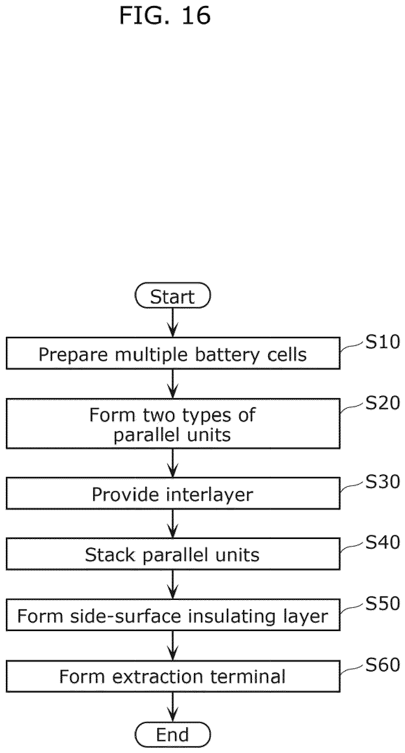

   FIG. 16 is a flowchart illustrating an example of a method of manufacturing the battery according to each embodiment or the variation.

### [Description of Embodiments]

### (Outline of Present Disclosure)

A battery according to one aspect of the present disclosure includes: a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked; a first insulating member covering an electrode layer among the electrode layers at a first side surface of the power generation element; and a first terminal electrode covering the first side surface and the first insulating member, and electrically connected to a counter-electrode layer among the counter-electrode layers. The power generation element includes: a first parallel unit that includes first battery cells among the plurality of battery cells and has both ends in a stacking direction at each of which a corresponding one of the counter-electrode layers is located; and a second parallel unit that includes second battery cells among the plurality of battery cells, has both ends in the stacking direction at each of which a corresponding one of the electrode layers is located, and is stacked on the first parallel unit.

With this, it is possible to achieve a high-performance battery. For example, the first insulating member covers the electrode layer at the first side surface, and thus it is possible to prevent a short circuit between the counter-electrode layer and the electrode layer through the first terminal electrode. Moreover, for example, all the battery cells are electrically connected in parallel. This can prevent overcharging or over-discharging of a specific battery cell due to the capacity difference of the battery cells. As described above, the reliability of the battery can be enhanced, and thus it is possible to achieve a high-performance battery.

Moreover, in each of the first parallel unit and the second parallel unit, the same layer is located at the both ends in the stacking direction, and thus warping is unlikely to occur. Accordingly, multiple parallel units can be stably stacked, and thus it is possible to increase the capacitive energy density.

Moreover, for example, the first parallel unit is located at one of ends of the power generation element in the stacking direction, and the second parallel unit may be located at the other of the ends of the power generation element.

With this, the electrode layer of the opposite polarity is located at the uppermost layer and the lowermost layer of the power generation element, and thus it is possible to use the uppermost layer and the lowermost layer of the power generation element as a part for electrode extraction to the outside. For example, this allows a large external terminal to be connected, and thus the connection resistance can be reduced by increasing the contact area. Accordingly, it is possible to improve the high current characteristics of the battery.

Moreover, for example, the power generation element may include an insulating layer located between the first parallel unit and the second parallel unit.

With this, it is possible to prevent a short circuit between the parallel units.

Moreover, for example, when viewed from front of the first side surface, the first terminal electrode does not cover at least one of end portions of a counter-electrode layer among the counter-electrode layers in a direction orthogonal to the stacking direction, and the first insulating member may further cover the at least one of the end portions.

With this, the first insulating member covers the end portion which is electrically unstable and likely to be short-circuited, and thus it is possible to prevent a short circuit.

Moreover, for example, at the first side surface, the first insulating member may cover at least a part of a solid electrolyte layer among the solid electrolyte layers.

With this, the first insulating member is formed to cover to a part of the solid electrolyte layer, and thus it is possible to prevent the electrode layer from being exposed without being covered with the first insulating member even when there is variation in size of the first insulating member. Moreover, in general, the solid electrolyte layer includes a powder-like material, and thus the end surface of the solid electrolyte layer has very fine unevenness. This improves the adhesion strength of the first insulating member and enhances the reliability of insulation. As described above, it is possible to further enhance the reliability of the battery.

Moreover, for example, at the first side surface, the first insulating member may cover from an electrode layer among the electrode layers to a part of a corresponding one of the counter-electrode layers along a stacking direction of the power generation element.

With this, the first insulating member covers to a part of the counter-electrode layer, and thus it is possible to sufficiently prevent the electrode layer from being exposed without being covered with the first insulating member. Moreover, in general, the counter-electrode active material layer also includes a powder-like material, and thus the end surface of the counter-electrode active material layer has very fine unevenness. This further improves the adhesion strength of the first insulating member and enhances the reliability of insulation. Accordingly, it is possible to further enhance the reliability of the battery.

Moreover, for example, at the first side surface, the first insulating member covers the electrode layer of each of the plurality of battery cells, and the first terminal electrode may be electrically connected to the counter-electrode layer of each of the plurality of battery cells.

With this, the first terminal electrode can be used to connect the battery cells in parallel. The first terminal electrode can be in close contact with the first side surface and the first insulating member, and thus the volume of a portion related to the parallel connection can be reduced. Accordingly, it is possible to increase the energy density of the battery.

Moreover, for example, in plan view of the first side surface, the first insulating member may have a stripe shape.

With this, the end surfaces of the electrode layers exposed on the first side surface in the shape of stripes can be covered by the stripe-shaped first insulating member.

Moreover, for example, the battery according to one aspect of the present disclosure may further include: a second insulating member covering a counter-electrode layer among the counter-electrode layers at a second side surface of the power generation element; and a second terminal electrode covering the second side surface and the second insulating member, and electrically connected to an electrode layer among the electrode layers.

With this, it is possible to achieve a higher performance battery. More specifically, the second insulating member covers the counter-electrode layer at the second side surface, and thus it is possible to prevent a short circuit between the electrode layer and the counter-electrode layer through the second terminal electrode. As described above, the reliability of the battery can be enhanced, and thus it is possible to achieve a high-performance battery.

Moreover, for example, the power generation element is a cuboid, and the second side surface may be opposite the first side surface. Note that the "cuboid" may be substantially the shape of a cuboid. For example, unevenness or tilt may be included in each of the faces or sides of the cuboid. For example, the lengths, areas, angles, or the like may include a several percent difference.

With this, the electrode terminal and the counter-electrode terminal can be separate from each other, and thus it is possible to further prevent a short circuit.

Moreover, for example, the battery may further include: a third insulating member covering an electrode layer among the electrode layers at a third side surface of the power generation element; and a third terminal electrode covering the third side surface and the third insulating member, and electrically connected to a counter-electrode layer among the counter-electrode layers.

With this, two side surfaces of the first side surface and the third side surface are used for the connection to the counter-electrode layer, and thus the contact area between the counter-electrode layer and the terminal electrode can be increased to decrease the connection resistance. Accordingly, it is possible to improve the high current characteristics of the battery.

Moreover, for example, the power generation element is a cuboid, and the third side surface may be adjacent to the first side surface.

This allows electrode extraction from two adjacent side surfaces. The same configuration can be applied to not only the counter-electrode layer but also the electrode layer, and thus it is easy to balance positive and negative. Accordingly, it is possible to enhance the reliability of the battery.

Moreover, for example, the electrode layer or the counter-electrode layer includes a current collector, and a thickness of the current collector may be less than or equal to 20 µm.

With this, it is possible to achieve improvement of energy density, improvement of output density, reduction in material cost, and the like.

Moreover, for example, the first insulating member may include a resin.

With this, it is possible to enhance the impact resistance of the battery. Moreover, it is possible to ease the stress exerted on the battery due to a temperature change of the battery or expansion and contraction of the battery in charging and discharging.

Moreover, for example, the battery according to one aspect of the present disclosure may further include a sealing member that does not cover at least a part of a main surface of the power generation element, and seals the power generation element.

With this, the power generation element can be protected against outside air, water, and the like, and thus it is possible to further enhance the reliability of the battery.

A method of manufacturing a battery according to one aspect of the present disclosure includes: (i) preparing a plurality of battery cells each of which includes an electrode layer, a counter-electrode layer, and a solid electrolyte layer located between the electrode layer and the counter-electrode layer; (ii) forming a layered body of the plurality of battery cells stacked in turn so that an order of arrangement of the electrode layer, the counter-electrode layer, and the solid electrolyte layer is alternately reversed; (iii) covering an electrode layer among the electrode layers with an insulating member at one side surface of the layered body; and (iv) covering the one side surface and the insulating member with a terminal electrode electrically connected to a counter-electrode layer among the counter-electrode layers. Step (ii) may include forming: a first parallel unit that includes first battery cells among the plurality of battery cells and has both ends in a stacking direction at each of which a corresponding one of the counter-electrode layers is located; and a second parallel unit that includes second battery cells among the plurality of battery cells, has both ends in the stacking direction at each of which a corresponding one of the electrode layers is located, and is stacked on the first parallel unit.

In this manner, it is possible to manufacture the high-performance battery described above.

Embodiments are described in details below with reference to drawings.

Each of the embodiments described below shows a general or specific example. Numerical values, shapes, materials, constituent elements, the arrangement and connection of the constituent elements, steps, the order of the steps, and the like shown in the following embodiments are examples, and are not intended to limit the present disclosure. Among the constituent elements in the following embodiments, constituent elements which are not recited in the independent claims are described as optional constituent elements.

The drawings are schematic views and are not exactly shown. Hence, for example, scales and the like are not necessarily the same in the drawings. In the drawings, substantially the same components are identified with the same reference signs, and repeated descriptions are omitted or simplified.

In the present specification, terms such as parallel and orthogonal which indicate relationships between elements, terms such as rectangular and cuboid which indicate the shapes of elements, and numerical ranges are expressions which not only indicate exact meanings but also indicate substantially equivalent ranges such as a range including a several percent difference.

In the present specification and the drawings, an x-axis, a y-axis, and a z-axis indicate three axes of a three-dimensional orthogonal coordinate system. When the shape of the power generation element of a battery in plan view is a rectangle, the x-axis and the y-axis correspond a direction parallel to a first side of the rectangle and a direction parallel to a second side orthogonal to the first side, respectively. The z-axis corresponds to the stacking direction of a plurality of battery cells included in the power generation element.

In the present specification, the "stacking direction" coincides with a direction normal to the main surfaces of a current collector and an active material layer. In the present specification, the "plan view" is a view when viewed in a direction perpendicular to the main surface of the power generation element, excluding a specified case such as single application. Note that, the "plan view of a surface" such as the "plan view of the first side surface" is a view when the "surface" is viewed from the front.

In the present specification, terms of "upward" and "downward" do not indicate an upward direction (vertically upward) and a downward direction (vertically downward) in absolute spatial recognition but are used as terms for defining a relative positional relationship based on a stacking order in a stacking configuration. The terms of "upward" and "downward" are applied not only to a case where two constituent elements are spaced with another constituent element present between the two constituent elements but also to a case where two constituent elements are arranged in close contact with each other to be in contact with each other. In the following description, the negative side of the z-axis is assumed to be "downward" or a "downward side", and the positive side of the z-axis is assumed to be "upward" or an "upward side".

In the present specification, unless otherwise specified, ordinal numbers such as "first" and "second" do not mean the number or order of constituent elements but are used to avoid confusion of similar constituent elements and to distinguish between them.

### [Embodiment 1]

The following describes the configuration of a battery according to Embodiment 1.

FIG. 1 is a cross-sectional view illustrating a cross-sectional configuration of battery 1 according to Embodiment 1. As shown in FIG. 1, battery 1 includes power generation element 10, electrode insulating layer 21, counter-electrode insulating layer 22, counter-electrode terminal 31, electrode terminal 32, and insulating layer 40. Battery 1 is, for example, an all-solid-state battery.

### [1. Power generation element]

Firstly, the specific configuration of power generation element 10 is described with reference to FIG. 1 and FIG. 2. FIG. 2 is a top view of power generation element 10 of battery 1 according to Embodiment 1. Note that FIG. 1 shows a cross section taken along line I-I shown in FIG. 2.

The shape of power generation element 10 in plan view is rectangular as shown in FIG. 2. In other words, the shape of power generation element 10 is a flattened cuboid. Here, "flattened" means that the thickness (i.e., the length in the z-axis direction) is shorter than each of the sides of the main surface (i.e., the length in each of the x-axis direction and the y-axis direction) or the maximum width. The shape of power generation element 10 in plan view may be polygonal such as square, hexagonal, or octagonal, or may be circular, oval, or the like.

Note that, in a cross-sectional view such as FIG. 1, the thickness of each layer is exaggerated to clarify the layer structure of power generation element 10. FIG. 1 shows not only the cross-sectional view but also a small schematic perspective view of battery 1 which schematically shows the position of the cross section. Other drawings described below also may schematically show the perspective view of the power generation element and the position of the cross section or the side surface shown by each of the drawings.

As shown in FIG. 1 and FIG. 2, power generation element 10 includes four side surfaces 11, 12, 13, and 14, and two main surfaces 15 and 16. In Embodiment 1, side surfaces 11, 12, 13, and 14 and main surfaces 15 and 16 are all flat.

Side surface 11 is an example of the first side surface. Side surface 12 is an example of the second side surface. Side surfaces 11 and 12 face away from each other, and are parallel to each other. Side surfaces 11 and 12 each include a different short side of main surface 15.

Side surface 13 is an example of the third side surface. Side surface 14 is an example of the fourth side surface. Side surfaces 13 and 14 face away from each other, and are parallel to each other. Side surfaces 13 and 14 each include a different long side of main surface 15.

Side surfaces 15 and 16 face away from each other, and are parallel to each other. Main surface 15 is the uppermost surface of power generation element 10. Main surface 16 is the lowermost surface of power generation element 10.

As shown in FIG. 1, power generation element 10 includes multiple battery cells 100. Battery cell 100 is a minimum unit of the battery, and also referred to as a unit cell. Multiple battery cells 100 are electrically connected in parallel and stacked. In Embodiment 1, all battery cells 100 of power generation element 10 are electrically connected in parallel. In the example shown in FIG. 1, the number of battery cells 100 of power generation element 10 is eight, but not limited to this. For example, the number of battery cells 100 of power generation element 10 may be an even number such as two or four.

Each of battery cells 100 includes electrode layer 110, counter electrode layer 120, and solid electrolyte layer 130. Electrode layer 110 includes electrode current collector 111 and electrode active material layer 112. Counter electrode layer 120 includes counter-electrode current collector 121 and counter-electrode active material layer 122. In each of battery cells 100, electrode current collector 111, electrode active material layer 112, solid electrolyte layer 130, counter-electrode active material layer 122, and counter-electrode current collector 121 are stacked in this order in the z-axis direction.

Note that electrode layer 110 is one of the positive electrode layer or the negative electrode layer of battery cell 100. Counter-electrode layer 120 is the other of the positive electrode layer or the negative electrode layer of battery cell 100. The following describes, as an example, a case where electrode layer 110 is the negative electrode layer, and counter-electrode layer 120 is the positive electrode layer.

The configurations of battery cells 100 are substantially the same. In two adjacent battery cells 100, the order of arrangement of the layers included in one of battery cells 100 is reversed. In other words, battery cells 100 are arranged and stacked in the z-axis direction while alternately reversing the order of arrangement of the layers included in each of battery cells 100. In Embodiment 1, the number of battery cells 100 is an even number, and thus the lowermost layer and the uppermost layer of power generation element 10 are each the current collector of the same polarity.

Multiple battery cells 100 are unitized into groups each including a predetermined number of battery cells 100. More specifically, an even number of battery cells 100 are connected in parallel, and constitutes one parallel unit. A layer of the same polarity is located at both ends of the parallel unit in the stacking direction.

In Embodiment 1, power generation element 10 includes parallel unit 10A and parallel unit 10B. Parallel unit 10A and parallel unit 10B are stacked with insulating layer 40 disposed therebetween.

Parallel unit 10A is an example of the first parallel unit, and counter-electrode layer 120 is located at both ends of the parallel unit in the stacking direction. More specifically, the uppermost layer of parallel unit 10A is counter-electrode current collector 121 of counter-electrode layer 120, and the lowermost layer of parallel unit 10A is also counter-electrode current collector 121 of counter-electrode layer 120.

Parallel unit 10A is a layered body of four battery cells 100. Note that battery cell 100 included in parallel unit 10A is an example of the first battery cell. The number of battery cells 100 included in parallel unit 10A is an even number, and thus counter-electrode layer 120 can be easily provided at both upper and lower ends of the parallel unit when battery cells 100 are stacked in turn so that the order of arrangement of layers included in battery cell 100 is alternately reversed.

Parallel unit 10A is located at one of the ends of power generation element 10 in the stacking direction (i.e., the end portion on negative side of z-axis). More specifically, parallel unit 10A is located at the lowermost layer of power generation element 10. Main surface 16 which is the bottom surface of power generation element 10 is the main surface of counter-electrode current collector 121 located at the lowermost layer in parallel unit 10A.

Parallel unit 10B is an example of the second parallel unit, and electrode layer 110 is located at both ends of the parallel unit in the stacking direction. More specifically, the uppermost layer of parallel unit 10B is electrode current collector 111 of electrode layer 110, and the lowermost layer of parallel unit 10B is also electrode current collector 111 of electrode layer 110.

Parallel unit 10B is a layered body of four battery cells 100. Note that battery cell 100 included in parallel unit 10B is an example of the second battery cell. The number of battery cells 100 included in parallel unit 10B is an even number, and thus electrode layer 110 can be easily provided at both upper and lower ends of the parallel unit when battery cells 100 are stacked in turn so that the order of arrangement of layers included in battery cell 100 is alternately reversed.

Parallel unit 10B is located at the other of the ends of power generation element 10 in the stacking direction (i.e., the end portion on positive side of z-axis). More specifically, parallel unit 10B is located at the uppermost layer of power generation element 10. Main surface 15 which is the top surface of power generation element 10 is the main surface of electrode current collector 111 located at the uppermost layer in parallel unit 10B.

In general, the positive electrode current collector and the negative electrode current collector are each often formed using a different material, and thus warping of battery cell 100 easily occurs due to the difference in strength between the current collectors. In contrast, in parallel unit 10A, the counter-electrode current collector, i.e., the current collector of the same polarity, is located at both ends in the stacking direction. Accordingly, warping of parallel unit 10A does not easily occur. The same is true of parallel unit 10B. With this, multiple parallel units 10A and 10B can be stably stacked, and thus it is possible to increase the capacitive energy density. Note that the number of battery cells 100 included in parallel unit 10A and the number of battery cells 100 included in parallel unit 10B may be different from each other.

The following describes each of the layers of battery cell 100 with reference to FIG. 3A. FIG. 3A is a cross-sectional view of battery cell 100 included in power generation element 10 according to Embodiment 1.

Each of electrode current collector 111 and counter-electrode current collector 121 is a conductive member which is foil-shaped, plate-shaped, or mesh-shaped. Each of electrode current collector 111 and counter-electrode current collector 121 may be, for example, a conductive thin film. For example, metals such as stainless steel (SUS), aluminum (Al), copper (Cu), and nickel (Ni) can be used as the material of electrode current collector 111 and counter-electrode current collector 121. Electrode current collector 111 and counter-electrode current collector 121 may be each formed using a different material.

The thickness of each of electrode current collector 111 and counter-electrode current collector 121 is, for example, at least 5 µm and at most 100 µm, but not limited to this. The thickness of each of electrode current collector 111 and counter-electrode current collector 121 may be 20 µm or less. The current-collector thickness of 20 µm or less allows improvement of energy density, improvement of output density, reduction in material cost, and the like. In Embodiment 1, single battery cells 100 are connected in parallel and stacked. Accordingly, the thickness of power generation element 10 can be kept small even when the number of battery cells connected in parallel is increased, thereby contributing to the improvement of energy density. An increase in the number of battery cells connected in parallel increases the number of current collectors, and thus a reduction in the thickness of the current collector is more useful to prevent an increase in the thickness of power generation element 10.

Electrode active material layer 112 is in contact with the main surface of electrode current collector 111. Note that electrode current collector 111 may include a current collector layer which is provided in a part in contact with electrode active material layer 112 and which includes a conductive material. Counter-electrode active material layer 122 is in contact with the main surface of counter-electrode current collector 121. Note that counter-electrode current collector 121 may include a current collector layer which is provided in a part in contact with counter-electrode active material layer 122 and which includes a conductive material.

Electrode active material layer 112 is arranged on the main surface of electrode current collector 111 on the side of counter-electrode layer 120. Electrode active material layer 112 includes, for example, a negative electrode active material as an electrode material. Electrode active material layer 112 is opposed to counter-electrode active material layer 122.

As the negative electrode active material contained in electrode active material layer 112, for example, a negative electrode active material such as graphite or metallic lithium can be used. As the material of the negative electrode active material, various types of materials which can withdraw and insert ions of lithium (Li), magnesium (Mg), or the like can be used.

As a material contained in electrode active material layer 112, for example, a solid electrolyte such as an inorganic solid electrolyte may be used. As the inorganic solid electrolyte, for example, a sulfide solid electrolyte or an oxide solid electrolyte can be used. As the sulfide solid electrolyte, for example, a mixture of lithium sulfide (Li₂S) and phosphorus pentasulfide (P₂S₅) can be used. As the material contained in electrode active material layer 112, for example, a conductive material such as acetylene black, or a binder for binding such as polyvinylidene fluoride may be used.

A paste-like paint in which the material contained in electrode active material layer 112 is kneaded together with a solvent is applied on the main surface of electrode current collector 111 and is dried, and thus electrode active material layer 112 is produced. After the drying, electrode layer 110 (which is also referred to as an electrode plate) including electrode active material layer 112 and electrode current collector 111 may be pressed so that the density of electrode active material layer 112 is increased. The thickness of electrode active material layer 112 is, for example, at least 5 µm and at most 300 µm, but not limited to this.

Counter-electrode active material layer 122 is arranged on the main surface of counter-electrode current collector 121 on the side of electrode layer 110. Counter-electrode active material layer 122 is, for example, a layer which includes a positive electrode material such as an active material. The positive electrode material is a material which forms the counter electrode of the negative electrode material. Counter-electrode active material layer 122 includes, for example, a positive electrode active material.

As the positive electrode active material contained in counter-electrode active material layer 122, for example, a positive electrode active material such as lithium cobaltate composite oxide (LCO), lithium nickelate composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), or lithium-nickel-manganese-cobalt composite oxide (LNMCO) can be used. As the material of the positive electrode active material, various types of materials which can withdraw and insert ions of Li, Mg, or the like can be used.

As a material contained in counter-electrode active material layer 122, for example, a solid electrolyte such as an inorganic solid electrolyte may be used. As the inorganic solid electrolyte, for example, a sulfide solid electrolyte or an oxide solid electrolyte can be used. As the sulfide solid electrolyte, for example, a mixture of Li₂S and P₂S₅ can be used. The surface of the positive electrode active material may be coated with a solid electrolyte. As the material contained in counter-electrode active material layer 122, for example, a conductive material such as acetylene black, or a binder for binding such as polyvinylidene fluoride may be used.

A paste-like paint in which the material contained in counter-electrode active material layer 122 is kneaded together with a solvent is applied on the main surface of counter-electrode current collector 121 and is dried, and thus counter-electrode active material layer 122 is produced. After the drying, counter-electrode layer 120 (which is also referred to as a counter-electrode plate) including counter-electrode active material layer 122 and counter-electrode current collector 121 may be pressed so that the density of counter-electrode active material layer 122 is increased. The thickness of counter-electrode active material layer 122 is, for example, at least 5 µm and at most 300 µm, but not limited to this.

Solid electrolyte layer 130 is arranged between electrode active material layer 112 and counter-electrode active material layer 122. Solid electrolyte layer 130 is in contact with electrode active material layer 112 and counter-electrode active material layer 122. Solid electrolyte layer 130 includes an electrolyte material. As the electrolyte material, a common electrolyte for the battery can be used. The thickness of solid electrolyte layer 130 may be at least 5 µm and at most 300 µm or may be at least 5 µm and at most 100 µm.

Solid electrolyte layer 130 includes a solid electrolyte. As the solid electrolyte, for example, a solid electrolyte such as an inorganic solid electrolyte can be used. As the inorganic solid electrolyte, for example, a sulfide solid electrolyte or an oxide solid electrolyte can be used. As the sulfide solid electrolyte, for example, a mixture of Li₂S and P₂S₅ can be used. Note that solid electrolyte layer 130 may contain, in addition to the electrolyte material, for example, a binder for binding such as polyvinylidene fluoride.

In Embodiment 1, electrode active material layer 112, counter-electrode active material layer 122, and solid electrolyte layer 130 are maintained in the shape of parallel flat plates. With this, it is possible to suppress the occurrence of a crack or a collapse caused by bending. Note that electrode active material layer 112, counter-electrode active material layer 122, and solid electrolyte layer 130 may be smoothly curved together.

In Embodiment 1, when viewed from the z-axis direction, the end surface of counter-electrode current collector 121 on the side of side surface 11 and the end surface of electrode layer 110 on the side of side surface 11 are aligned. More specifically, when viewed from the z-axis direction, the end surface of counter-electrode current collector 121 on the side of side surface 11 and the end surface of electrode current collector 111 on the side of side surface 11 are aligned. The same is true for the end surface of counter-electrode current collector 121 on the side of side surface 12 and the end surface of electrode current collector 111 on the side of side surface 12.

More specifically, in battery cell 100, electrode current collector 111, electrode active material layer 112, solid electrolyte layer 130, counter-electrode active material layer 122, and counter-electrode current collector 121 are the same in shape and size, and thus their contours coincide with one another. In other words, the shape of battery cell 100 is a flattened cuboid-like flat plate.

As shown in FIG. 1, in Embodiment 1, a current collector is shared between two adjacent battery cells 100. For example, battery cell 100 of the lowermost layer and battery cell 100 of the second lowest layer share electrode current collector 111.

More specifically, as shown in FIG. 1, in multiple battery cells 100, two adjacent electrode layers 110 share own electrode current collector 111. Electrode active material layer 112 is provided on the both main surfaces of shared electrode current collector 111. Two adjacent counter-electrode layers 120 share own counter-electrode current collector 121. Counter-electrode active material layer 122 is provided on the both main surfaces of shared counter-electrode current collector 121.

Such battery 1 is formed by stacking not only battery cell 100 shown in FIG. 3A but also battery cell 100B shown in FIG. 3B and battery cell 100C shown in FIG. 3C in combination. Note that, in this disclosure, battery cell 100 shown in FIG. 3A is referred to as battery cell 100A.

Battery cell 100B shown in FIG. 3B has a configuration in which electrode current collector 111 is removed from battery cell 100A shown in FIG. 3A. In other words, electrode layer 110B of battery cell 100B includes only electrode active material layer 112.

Battery cell 100C shown in FIG. 3C has a configuration in which counter-electrode current collector 121 is removed from battery cell 100A shown in FIG. 3A. In other words, counter-electrode layer 120C of battery cell 100C includes only counter-electrode active material layer 122.

FIG. 4 is a cross-sectional view illustrating power generation element 10 according to Embodiment 1. FIG. 4 is a diagram in which only power generation element 10 is extracted from FIG. 1. As shown in FIG. 4, battery cell 100A is located at the lowermost layer, and battery cells 100B and 100C are alternately stacked upward. In doing so, battery cell 100B shown in FIG. 3B is turned upside down and stacked. In this manner, parallel unit 10A is formed.

The same is true of parallel unit 10B. In parallel unit 10B, battery cell 100C and battery cell 100B are alternately stacked, and then battery cell 100A is stacked at the uppermost layer. Note that the method of forming each parallel unit is not limited to this. For example, a unit of two battery cells 100 sharing a current collector may be formed by performing double-sided coating on one current collector, and the formed units may be stacked.

As described above, power generation element 10 according to Embodiment 1 includes battery cells 100 all connected in parallel, and does not include battery cells connected in series. Accordingly, in charging and discharging battery 1, unevenness in the charge and discharge state caused by the capacity difference of battery cells 100 is unlikely to occur. This considerably reduces the possibility of overcharging or over-discharging of some of multiple battery cells 100, thereby enhancing the reliability of battery 1.

### [2. Insulating layer]

Next, electrode insulating layer 21 and counter-electrode insulating layer 22 are described with reference to FIG. 5 to FIG. 10.

FIG. 5 is a top view of battery 1 according to Embodiment 1. FIG. 6 is a plan view of the bottom surface of battery 1 according to Embodiment 1 when viewed from above through the transparent top surface.

FIG. 7 is a cross-sectional view illustrating a cross-sectional configuration of battery 1 taken along line Vlla-Vlla and line Vllb-Vllb in FIG. 2, FIG. 5, or FIG. 6. The cross section taken along line Vlla-Vlla is the same as the cross section taken along line Vllb-Vllb. FIG. 8 is a cross-sectional view illustrating a cross-sectional configuration of the battery taken along line VIII-VIII in FIG. 2, FIG. 5, or FIG. 6.

FIG. 9 is a side view illustrating a positional relationship between first side surface 11 of power generation element 10 and electrode insulating layer 21 and counter-electrode terminal 31 which are formed on first side surface 11, according to Embodiment 1. FIG. 10 is a side view illustrating a positional relationship between second side surface 12 of power generation element 10 and counter-electrode insulating layer 22 and electrode terminal 32 which are formed on second side surface 12, according to Embodiment 1. Note that in FIG. 9 and FIG. 10, the same hatching as each layer shown in FIG. 1 is applied to the end surface of each layer at side surface 11 or side surface 12.

Electrode insulating layer 21 is one example of the first insulating member. As shown in FIG. 1, electrode insulating layer 21 covers electrode layer 110 at side surface 11. More specifically, electrode insulating layer 21 completely covers electrode current collector 111 and electrode active material layer 112 at side surface 11.

Part (a) of FIG. 9 is a side view of power generation element 10, and also a plan view of side surface 11 when viewed from the front. Part (b) of FIG. 9 illustrates side surface 11 in part (a) of FIG. 9 and electrode insulating layer 21 provided on side surface 11. In other words, part (b) of FIG. 9 is a side view of battery 1 in FIG. 1 when viewed from the negative side of the x-axis through transparent counter-electrode terminal 31. Note that part (c) of FIG. 9 is a side view of battery 1 on side-surface 11 side.

As shown in part (b) of FIG. 9, at side surface 11, electrode insulating layer 21 covers electrode layer 110 of each of battery cells 100. Electrode insulating layer 21 does not cover at least a part of counter-electrode layer 120 of each of battery cells 100. Accordingly, in plan view of side surface 11, electrode insulating layer 21 has a stripe shape.

In doing so, electrode insulating layer 21 continuously covers electrode layers 110 of two adjacent battery cells 100. More specifically, electrode insulating layer 21 continuously covers from at least a part of solid electrolyte layer 130 of one of two adjacent battery cells 100 to at least a part of solid electrolyte layer 130 of the other of two adjacent battery cells 100.

As described above, electrode insulating layer 21 covers at least a part of solid electrolyte layer 130 at side surface 11. More specifically, in plan view of side surface 11, the contour of electrode insulating layer 21 overlaps with solid electrolyte layer 130. With this, even when the width (the length in the z-axis direction) varies depending on manufacturing variation of electrode insulating layer 21, electrode layer 110 is unlikely to be exposed. Accordingly, it is possible to prevent electrode layer 110 and counter-electrode layer 120 from being short-circuited through counter-electrode terminal 31 that is formed to cover electrode insulating layer 21. The end surface of solid electrolyte layer 130 including a powder-like material has very fine unevenness. Accordingly, electrode insulating layer 21 penetrates into this unevenness, thereby improving the adhesion strength of electrode insulating layer 21 and enhancing the reliability of insulation.

In Embodiment 1, electrode insulating layer 21 may cover entire solid electrolyte layer 130 at side surface 11. More specifically, the contour of electrode insulating layer 21 may overlap with the boundary between solid electrolyte layer 130 and counter-electrode active material layer 122. Note that electrode insulating layer 21 does not necessarily need to cover a part of solid electrolyte layer 130. For example, the contour of electrode insulating layer 21 may overlap with the boundary between solid electrolyte layer 130 and electrode active material layer 112.

Note that electrode insulating layer 21 covers a part of insulating layer 40 at side surface 11, but the present disclosure is not limited to this. For example, at side surface 11, electrode insulating layer 21 may cover entire insulating layer 40 as long as counter-electrode current collector 121 which is the uppermost layer of parallel unit 10A is exposed. Alternatively, at side surface 11, electrode insulating layer 21 may cover no insulating layer 40 as long as electrode current collector 111 which is the lowermost layer of parallel unit 10B is completely covered.

In Embodiment 1, in addition to a part of the stripe shape, electrode insulating layer 21 may be provided along the z-axis at the end portions of side surface 11 in the y-axis direction. In other words, in plan view of side surface 11, electrode insulating layer 21 may be ladder-shaped. As described above, electrode insulating layer 21 may cover a part of counter-electrode current collector 121. For example, as shown in FIG.7, at the end portions of side surface 11 in the y-axis direction, electrode insulating layer 21 covers from the lowermost layer to the uppermost layer of power generation element 10. With this, electrode insulating layer 21 covers the end portion which is electrically unstable and likely to be short-circuited, and thus it is possible to prevent a short circuit.

In Embodiment 1, as shown in FIG. 5 and FIG. 6, electrode insulating layer 21 is provided on not only side surface 11 but also side surface 13. As shown in FIG. 8, electrode insulating layer 21 provided on side surface 13 covers not only electrode layer 110 but also solid electrolyte layer 130, counter-electrode layer 120, and insulating layer 40. More specifically, electrode insulating layer 21 covers entire side surface 13. The part of electrode insulating layer 21 which is provided on side surface 13 is an example of the third insulating member.

The uppermost layer of power generation element 10 is electrode current collector 111, and thus, as shown in FIG. 5, in the vicinity of the upper end of side surface 11, electrode insulating layer 21 covers a part of the main surface of electrode current collector 111 located at the uppermost layer. The same is true of the vicinity of the upper end of side surface 13. With this, electrode insulating layer 21 has resistance to an external force from the z-axis direction, and thus removal is prevented. When counter-electrode terminal 31 is extended to main surface 15 of power generation element 10, it is possible to prevent a short circuit caused by the contact of counter-electrode terminal 31 with electrode current collector 111. As described above, it is possible to enhance the reliability of battery 1.

In contrast, the lowermost surface of power generation element 10 is counter-electrode current collector 121. Accordingly, as shown in FIG. 6, in the vicinity of the lower end of side surface 11, electrode insulating layer 21 does not cover counter-electrode current collector 121 except the both ends in the y-axis direction. With this, it is possible to ensure the connection between counter-electrode terminal 31 and the main surface of counter-electrode current collector 121. In the vicinity of the lower end of side surface 13, electrode insulating layer 21 covers counter-electrode current collector 121. With this, electrode insulating layer 21 has resistance to an external force from the z-axis direction, and thus removal is prevented.

Counter-electrode insulating layer 22 is one example of the second insulating member. As shown in FIG. 1, counter-electrode insulating layer 22 covers counter-electrode layer 120 at side surface 12. More specifically, counter-electrode insulating layer 22 completely covers counter-electrode current collector 121 and counter-electrode active material layer 122 at side surface 12.

Part (a) of FIG. 10 is a side view of power generation element 10, and also a plan view of side surface 12 when viewed from the front. Part (b) of FIG. 10 illustrates side surface 12 in part (a) of FIG. 10 and counter-electrode insulating layer 22 provided on side surface 12. In other words, part (b) of FIG. 10 is a side view of battery 1 in FIG. 1 when viewed from the positive side of the x-axis through transparent electrode terminal 32. Note that part (c) of FIG. 10 is a side view of battery 1 on side-surface 12 side.

As shown in part (b) of FIG. 10, at side surface 12, counter-electrode insulating layer 22 covers counter-electrode layer 120 of each of battery cells 100. Counter-electrode insulating layer 22 does not cover at least a part of electrode layer 110 of each of battery cells 100. Accordingly, in plan view of side surface 12, counter-electrode insulating layer 22 has a stripe shape.

In doing so, counter-electrode insulating layer 22 continuously covers counter-electrode layers 120 of two adjacent battery cells 100. More specifically, counter-electrode insulating layer 22 continuously covers from at least a part of solid electrolyte layer 130 of one of two adjacent battery cells 100 to at least a part of solid electrolyte layer 130 of the other of two adjacent battery cells 100.

As described above, counter-electrode insulating layer 22 covers at least a part of solid electrolyte layer 130 at side surface 12. More specifically, in plan view of side surface 12, the contour of counter-electrode insulating layer 22 overlaps with solid electrolyte layer 130. With this, even when the width (the length in the z-axis direction) varies depending on manufacturing variation of counter-electrode insulating layer 22, counter-electrode layer 120 is unlikely to be exposed. Accordingly, it is possible to prevent counter-electrode layer 120 and electrode layer 110 from being short-circuited through electrode terminal 32 that is formed to cover counter-electrode insulating layer 22. Counter-electrode insulating layer 22 penetrates into the unevenness on the end surface of solid electrolyte layer 130, thereby improving the adhesion strength of counter-electrode insulating layer 22 and enhancing the reliability of insulation.

In Embodiment 1, counter-electrode insulating layer 22 may cover entire solid electrolyte layer 130 at side surface 12. More specifically, the contour of counter-electrode insulating layer 22 may overlap with the boundary between solid electrolyte layer 130 and electrode active material layer 112. Note that counter-electrode insulating layer 22 does not necessarily need to cover a part of solid electrolyte layer 130. For example, the contour of counter-electrode insulating layer 22 may overlap with the boundary between solid electrolyte layer 130 and counter-electrode active material layer 122.

Note that counter-electrode insulating layer 22 covers a part of insulating layer 40 at side surface 12, but the present disclosure is not limited to this. For example, at side surface 12, counter-electrode insulating layer 22 may cover no insulating layer 40 as long as counter-electrode current collector 121 which is the uppermost layer of parallel unit 10A is covered. Alternatively, at side surface 12, counter-electrode insulating layer 22 may cover entire insulating layer 40 as long as electrode current collector 111 which is the lowermost layer of parallel unit 10B is exposed.

In Embodiment 1, in addition to a part of the stripe shape, counter-electrode insulating layer 22 may be provided along the z-axis at the end portions of side surface 12 in the y-axis direction. In other words, in plan view of side surface 12, counter-electrode insulating layer 22 may be ladder-shaped. As described above, counter-electrode insulating layer 22 may cover a part of electrode current collector 111. For example, as shown in FIG. 7, at the end portions of side surface 12 in the y-axis direction, counter-electrode insulating layer 22 covers from the lowermost layer to the uppermost layer of power generation element 10. With this, counter-electrode insulating layer 22 covers the end portion which is electrically unstable and likely to be short-circuited, and thus it is possible to prevent a short circuit.

In Embodiment 1, as shown in FIG. 5 and FIG. 6, counter-electrode insulating layer 22 is provided on not only side surface 12 but also side surface 14. As shown in FIG. 8, counter-electrode insulating layer 22 provided on side surface 14 covers not only counter-electrode layer 120 but also solid electrolyte layer 130, electrode layer 110, and insulating layer 40. More specifically, counter-electrode insulating layer 22 covers entire side surface 14. The part of counter-electrode insulating layer 22 which is provided on side surface 14 is an example of the fourth insulating member.

The lowermost layer of power generation element 10 is counter-electrode current collector 121, and thus, as shown in FIG. 6, in the vicinity of the lower end of side surface 12, counter-electrode insulating layer 22 covers a part of the main surface of counter-electrode current collector 121 located at the lowermost layer. The same is true of the vicinity of the lower end of side surface 14. With this, counter-electrode insulating layer 22 has resistance to an external force from the z-axis direction, and thus removal is prevented. When electrode terminal 32 is extended to main surface 16 of power generation element 10, it is possible to prevent a short circuit caused by the contact of electrode terminal 32 with counter-electrode current collector 121. As described above, it is possible to enhance the reliability of battery 1.

In contrast, the uppermost surface of power generation element 10 is electrode current collector 111. Accordingly, as shown in FIG. 5, in the vicinity of the upper end of side surface 12, counter-electrode insulating layer 22 does not cover electrode current collector 111 except the both ends in the y-axis direction. With this, it is possible to ensure the connection between electrode terminal 32 and the main surface of electrode current collector 111.

Note that the case where electrode insulating layer 21 and counter-electrode insulating layer 22 each cover two side surfaces of power generation element 10 is shown as an example, but the present disclosure is not limited to this. For example, one of electrode insulating layer 21 and counter-electrode insulating layer 22 may cover three side surfaces. Alternatively, at least one of side surface 13 or side surface 14 may be covered with both electrode insulating layer 21 and counter-electrode insulating layer 22.

Each of electrode insulating layer 21 and counter-electrode insulating layer 22 is formed using an insulating material that has electrical insulating property. For example, each of electrode insulating layer 21 and counter-electrode insulating layer 22 includes a resin. The resin is, for example, an epoxy resin material, but not limited to this. Note that an inorganic material may be used as the insulating material. Available insulating materials are selected based on various properties such as flexibility, a gas barrier property, impact resistance, and heat resistance. Electrode insulating layer 21 and counter-electrode insulating layer 22 are each formed using the same material, but may be each formed using a different material.

Note that electrode insulating layer 21 and counter-electrode insulating layer 22 may be integrally formed using the same material. In other words, the boundary between electrode insulating layer 21 and counter-electrode insulating layer 22 need not be clearly identified. Moreover, electrode insulating layer 21 may cover only side surface 11, and need not be provided on side surface 13. Moreover, counter-electrode insulating layer 22 may cover only side surface 12, and need not be provided on side surface 14. The insulating layer provided on side surface 13 may be formed using a material different from both electrode insulating layer 21 and counter-electrode insulating layer 22. The same is true of the insulating layer provided on side surface 14.

### [3. Terminal]

Next, counter-electrode terminal 31 and electrode terminal 32 are described.

Counter-electrode terminal 31 is one example of the first terminal electrode. As shown in FIG. 1, counter-electrode terminal 31 covers side surface 11 and electrode insulating layer 21 to be electrically connected to counter-electrode layer 120. More specifically, counter-electrode terminal 31 covers electrode insulating layer 21 and a part of side surface 11 that is not covered by electrode insulating layer 21.

As shown in part (b) of FIG. 9, in the part of side surface 11 that is not covered by electrode insulating layer 21, the end surface of counter-electrode current collector 121 and the end surface of counter-electrode active material layer 122 are exposed. Accordingly, counter-electrode terminal 31 is in contact with the end surface of counter-electrode current collector 121 and the end surface of counter-electrode active material layer 122 to be electrically connected to counter-electrode layer 120. Counter-electrode active material layer 122 includes a powder-like material. Accordingly, like solid electrolyte layer 130, counter-electrode active material layer 122 has very fine unevenness. Counter-electrode terminal 31 penetrates into the unevenness on the end surface of counter-electrode active material layer 122, thereby improving the adhesion strength of counter-electrode terminal 31 and enhancing the reliability of electrical connection.

Counter-electrode terminal 31 is electrically connected to counter-electrode layer 120 of each of battery cells 100. In other words, counter-electrode terminal 31 plays a part of the function of electrically connecting battery cells 100 in parallel. As shown in FIG. 1 and part (c) of FIG. 9, counter-electrode terminal 31 covers almost entire side surface 11 at once. In Embodiment 1, counter-electrode layer 120 is the positive electrode, and thus counter-electrode terminal 31 serves as the positive-electrode extraction electrode of battery 1.

As shown in FIG. 1, in the vicinity of the lower end of side surface 11, counter-electrode terminal 31 covers a part of the main surface of counter-electrode current collector 121 located at the lowermost layer. With this, counter-electrode terminal 31 has resistance to an external force from the z-axis direction, and thus removal is prevented. The contact area between counter-electrode terminal 31 and counter-electrode current collector 121 is increased, and thus connection resistance between counter-electrode terminal 31 and counter-electrode current collector 121 is decreased. Accordingly, the high current characteristics can be improved. For example, rapid charge of battery 1 becomes possible.

Electrode terminal 32 is one example of the second terminal electrode. As shown in FIG. 1, electrode terminal 32 covers side surface 12 and counter-electrode insulating layer 22 to be electrically connected to electrode layer 110. More specifically, electrode terminal 32 covers counter-electrode insulating layer 22 and a part of side surface 12 that is not covered by counter-electrode insulating layer 22.

As shown in part (b) of FIG. 10, in the part of side surface 12 that is not covered by counter-electrode insulating layer 22, the end surface of electrode current collector 111 and the end surface of electrode active material layer 112 are exposed. Accordingly, electrode terminal 32 is in contact with the end surface of electrode current collector 111 and the end surface of electrode active material layer 112 to be electrically connected to electrode layer 110. Electrode active material layer 112 includes a powder-like material. Accordingly, like solid electrolyte layer 130, electrode active material layer 112 has very fine unevenness. Electrode terminal 32 penetrates into the unevenness on the end surface of electrode active material layer 112, thereby improving the adhesion strength of electrode terminal 32 and enhancing the reliability of electrical connection.

Electrode terminal 32 is electrically connected to electrode layer 110 of each of battery cells 100. In other words, electrode terminal 32 plays a part of the function of electrically connecting battery cells 100 in parallel. As shown in FIG. 1 and part (c) of FIG. 10, electrode terminal 32 covers almost entire side surface 12 at once. In Embodiment 1, electrode layer 110 is the negative electrode, and thus electrode terminal 32 serves as the negative-electrode extraction electrode of battery 1.

As shown in FIG. 1, in the vicinity of the upper end of side surface 12, electrode terminal 32 covers a part of the main surface of electrode current collector 111 located at the uppermost layer. With this, electrode terminal 32 has resistance to an external force from the z-axis direction, and thus removal is prevented. The contact area between electrode terminal 32 and electrode current collector 111 is increased, and thus connection resistance between electrode terminal 32 and electrode current collector 111 is decreased. Accordingly, the high current characteristics can be improved.

Counter-electrode terminal 31 and electrode terminal 32 are formed using a resin material or the like that is conductive. Alternatively, counter-electrode terminal 31 and electrode terminal 32 may be formed using a metal material such as solder. Available conductive materials are selected based on various properties such as flexibility, a gas barrier property, impact resistance, heat resistance, and solder wettability. Counter-electrode terminal 31 and electrode terminal 32 are each formed using the same material, but may be each formed using a different material.

As described above, counter-electrode terminal 31 and electrode terminal 32 each not only serve as the positive-electrode extraction electrode or the negative-electrode extraction electrode of battery 1, but also play a part of the function of connecting battery cells 100 in parallel. As shown in FIG. 1, counter-electrode terminal 31 and electrode terminal 32 are formed to be in close contact with and cover side surface 11 and side surface 12 of power generation element 10, respectively. Accordingly, it is possible to reduce these volumes. In other words, in comparison with the conventional tub electrode for current collection, the volume of the terminal electrode is reduced. Accordingly, it is possible to improve the energy density per volume of battery 1.

### [4. Insulating layer]

Next, insulating layer 40 is described.

Insulating layer 40 is located between parallel unit 10A and parallel unit 10B. Insulating layer 40 is provided to prevent parallel unit 10A and parallel unit 10B from being electrically connected in series. More specifically, insulating layer 40 prevents counter-electrode current collector 121 located at the uppermost layer of parallel unit 10A and electrode current collector 111 located at the lowermost layer of parallel unit 10B from being in contact with each other and electrically connected to each other.

The size and shape of insulating layer 40 in plan view are each the same as those of the current collector with which insulating layer 40 is in contact. With this, at each of side surfaces 11, 12, 13, and 14, the end surface of insulating layer 40, the end surface of parallel unit 10A, and the end surface of parallel unit 10B are in the same plane. In other words, side surfaces 11, 12, 13, and 14 are each a flat surface.

Note that the end surface of insulating layer 40 may be recessed relative to the end surface of parallel unit 10A and the end surface of parallel unit 10B. In this case, a gap is formed between parallel unit 10A and parallel unit 10B. Electrode insulating layer 21 and counter-electrode insulating layer 22 penetrate into the gap. With this, electrode insulating layer 21 and counter-electrode insulating layer 22 can be more firmly secured.

For example, insulating layer 40 is formed using an insulating resin material. For example, insulating layer 40, electrode insulating layer 21, and counter-electrode insulating layer 22 may be all formed using the same material. Note that insulating layer 40 may be formed using an inorganic material such as a metal-oxide film which is insulating. Insulating layer 40 is sufficient as long as the top surface and the bottom surface of insulating layer 40 are insulated, and thus may be a metal plate in which an insulating film is formed on one or both surfaces of the metal plate, for example.

With provided insulating layer 40, it is possible to stack two parallel units 10A and 10B in which the layer of the opposite polarity is exposed at the respective top and bottom surfaces, without being connected in series. As the result, at the uppermost layer and the lowermost layer of power generation element 10, a layer of the opposite polarity is located. In other words, each of the uppermost layer and the lowermost layer of power generation element 10 can be used for electrode extraction. For example, this allows a large external terminal to be connected, and thus the connection resistance can be reduced by increasing the contact area. Accordingly, it is possible to improve the high current characteristics of battery 1. An example of the external terminal is described later with reference to FIG. 14.

### [Embodiment 2]

Next, Embodiment 2 is described.

A battery according to Embodiment 2 differs from the battery according to Embodiment 1 in that each of the electrode terminal and the counter-electrode terminal is provided on two side surfaces of power generation element 10. The following description focuses on differences from Embodiment 1, and common descriptions are omitted or simplified.

FIG. 11 is a top view of battery 201 according to Embodiment 2. FIG. 12 is a plan view of the bottom surface of battery 201 according to Embodiment 2 when viewed from above through a transparent top surface. FIG. 13 is a cross-sectional view illustrating the cross-sectional configuration of battery 201 according to Embodiment 2. FIG. 13 shows a cross section taken along line XIII-XIII in FIG. 11 or FIG. 12.

Battery 201 according to Embodiment 2 differs from battery 1 shown in FIG. 5 and FIG. 6 in that counter-electrode terminal 231 and electrode terminal 232 are included as well as counter-electrode terminal 31 and electrode terminal 32.

Counter-electrode terminal 231 is one example of the third terminal electrode. Counter-electrode terminal 231 covers side surface 13 and electrode insulating layer 21 to be connected to counter-electrode layer 120. As shown in FIG. 13, counter-electrode terminal 231 has the same configuration as counter-electrode terminal 31 except being provided on not side surface 11 but side surface 13. Note that counter-electrode terminal 231 and counter-electrode terminal 31 are connected, and thus may be integrally formed.

Electrode terminal 232 is one example of the fourth terminal electrode. Electrode terminal 232 covers side surface 14 and counter-electrode insulating layer 22 to be connected to electrode layer 110. As shown in FIG. 13, electrode terminal 232 has the same configuration as electrode terminal 32 except being provided on not side surface 12 but side surface 14. Note that electrode terminal 232 and electrode terminal 32 are connected, and thus may be integrally formed.

This allows electrode extraction from two adjacent side surfaces. The contact area between each layer and the terminal is increased, and thus the connection resistance is decreased. Accordingly, the high current characteristics of battery 201 can be improved. Moreover, not only counter-electrode layer 120 but also electrode layer 110 can have the same configuration, and thus it is easy to balance positive and negative. Accordingly, it is possible to enhance the reliability of the battery.

Note that a terminal of the same polarity may be provided on not two adjacent side surfaces but two opposite side surfaces. For example, counter-electrode terminals 31 and 231 may be provided on side surfaces 11 and 12, and electrode terminals 32 and 232 may be provided on side surfaces 13 and 14, respectively.

### [Embodiment 3]

Next, Embodiment 3 is described.

A battery according to Embodiment 3 differs from the battery according to Embodiment 1 in that a sealing member and a contact unit are further provided. The following description focuses on differences from Embodiment 1, and common descriptions are omitted or simplified.

FIG. 14 is a cross-sectional view illustrating the cross-sectional configuration of battery 301 according to Embodiment 3. As shown in FIG. 14, battery 301 includes sealing member 350, electrode contact 361, and counter-electrode contact 362 in addition to the components of battery 1 according to Embodiment 1.

Sealing member 350 does not cover at least a part of the main surface of power generation element 10, and seals power generation element 10. More specifically, sealing member 350 does not cover a part of the lowermost surface of parallel unit 10A and a part of the uppermost surface of parallel unit 10B, and covers the other parts.

For example, sealing member 350 is formed using an insulating material which is electrically insulating. As the insulating material, for example, a common material for the battery sealing member such as a sealant can be used. As the insulating material, for example, a resin material can be used. Note that the insulating material may be a material which is insulating and non-ionically conductive. For example, the insulating material may be at least one of epoxy resin, acrylic resin, polyimide resin, or silsesquioxane.

Note that sealing member 350 may include multiple different insulating materials. For example, sealing member 350 may have a multilayer structure. Each of the layers in the multilayer structure may be formed using a different material to have different properties.

Sealing member 350 may include a particulate metal oxide material. As the metal oxide material, silicon oxide, aluminum oxide, titanium oxide, zinc oxide, cerium oxide, iron oxide, tungsten oxide, zirconium oxide, calcium oxide, zeolite, glass, or the like can be used. For example, sealing member 350 may be formed using a resin material in which multiple particles of the metal oxide material are dispersed.

It is sufficient that the particle size of the metal oxide material is less than or equal to the distance between electrode current collector 111 and counter-electrode current collector 121. For example, the particle shape of the metal oxide material is a spherical shape, an ellipsoidal shape, or a rod shape, but is not limited to these shapes.

With provided sealing member 350, it is possible to enhance the reliability of battery 301 at various points such as mechanical strength, short-circuit prevention, and a moisture-proof property.

Electrode contact 361 is connected to a part of main surface 15 of power generation element 10 which is not covered by sealing member 350. Counter-electrode contact 362 is connected to a part of main surface 16 of power generation element 10 which is not covered by sealing member 350.

Electrode contact 361 is electrically connected by coming in contact with electrode current collector 111 located at the uppermost layer of parallel unit 10B. Electrode contact 361 is an example of the extraction electrode for one of the polarities of power generation element 10.

Counter-electrode contact 362 is electrically connected by coming in contact with counter-electrode current collector 121 located at the lowermost layer of parallel unit 10A. Counter-electrode contact 362 is an example of the extraction electrode for the other of the polarities of power generation element 10.

In each of the cross-sectional views, power generation element 10 is shown as an aspect in which the thickness direction is long, but the actual shape of power generation element 10 is flat. In other words, the area of each of main surfaces 15 and 16 of power generation element 10 is larger than the area of each of the side surfaces of power generation element 10. Accordingly, the contact is connected to main surfaces 15 and 16, and thus it is possible to achieve highly stable connection and decrease in the connection resistance.

### [Variations]

Next, variations of Embodiments 1 to 3 described above are described.

Each of the variations differs from each embodiment in the region of the insulating layer covering the side surface. The following description focuses on differences from each embodiment, and common descriptions are omitted or simplified.

FIG. 15 is a cross-sectional view illustrating a cross-sectional configuration of battery 401 according to a variation. As shown in FIG. 15, battery 401 differs from battery 1 according to Embodiment 1 in that electrode insulating layer 421 and counter-electrode insulating layer 422 are included instead of electrode insulating layer 21 and counter-electrode insulating layer 22.

As shown in FIG. 15, at side surface 11, electrode insulating layer 421 covers not only electrode layer 110 but also solid electrolyte layer 130 and a part of counter-electrode layer 120. In other words, electrode insulating layer 421 covers from electrode layer 110 to a part of counter-electrode layer 120. More specifically, electrode insulating layer 421 covers a part of counter-electrode active material layer 122. In the present variation, electrode insulating layer 421 continuously covers from at least a part of counter-electrode active material layer 122 of one of two adjacent battery cells 100 to at least a part of counter-electrode active material layer 122 of the other of two adjacent battery cells 100. For example, electrode insulating layer 421 completely covers one electrode current collector 111, electrode active material layers 112 located on opposite sides of one electrode current collector 111, and two solid electrolyte layers 130 located on opposite sides of one electrode current collector 111. For example, in plan view of side surface 11, the contour of electrode insulating layer 421 overlaps with counter-electrode active material layer 122.

With this, even when the width (the length in the z-axis direction) varies depending on manufacturing variation of electrode insulating layer 421, electrode layer 110 is extremely unlikely to be exposed. Accordingly, it is possible to prevent electrode layer 110 and counter-electrode layer 120 from being short-circuited through counter-electrode terminal 31. Moreover, electrode insulating layer 421 penetrates into the unevenness on the end surface of counter-electrode active material layer 122, thereby improving the adhesion strength of electrode insulating layer 421 and enhancing the reliability of insulation.

Note that, at side surface 11, electrode insulating layer 421 may cover entire counter-electrode active material layer 122. More specifically, the contour of electrode insulating layer 421 may overlap with the boundary between counter-electrode active material layer 122 and counter-electrode current collector 121.

In the present variation, at side surface 12, counter-electrode insulating layer 422 also has the same configuration. More specifically, at side surface 12, counter-electrode insulating layer 422 covers not only counter-electrode layer 120 but also solid electrolyte layer 130 and a part of electrode layer 110. In other words, counter-electrode insulating layer 422 covers from counter-electrode layer 120 to a part of electrode layer 110. More specifically, counter-electrode insulating layer 422 covers a part of electrode active material layer 112. In the present variation, counter-electrode insulating layer 422 continuously covers from at least a part of electrode active material layer 112 of one of two adjacent battery cells 100 to at least a part of electrode active material layer 112 of the other of two adjacent battery cells 100. For example, counter-electrode insulating layer 422 completely covers one counter-electrode current collector 121, counter-electrode active material layers 122 located on opposite sides of one counter-electrode current collector 121, and two solid electrolyte layers 130 located on opposite sides of one counter-electrode current collector 121.

For example, in plan view of side surface 12, the contour of counter-electrode insulating layer 422 overlaps with electrode active material layer 112. With this, even when the width (the length in the z-axis direction) varies depending on manufacturing variation of counter-electrode insulating layer 422, counter-electrode layer 120 is extremely unlikely to be exposed. Accordingly, it is possible to prevent counter-electrode layer 120 and electrode layer 110 from being short-circuited through electrode terminal 32. Moreover, counter-electrode insulating layer 422 penetrates into the unevenness on the end surface of electrode active material layer 112, thereby improving the adhesion strength of counter-electrode insulating layer 422 and enhancing the reliability of insulation.

Note that, at side surface 12, counter-electrode insulating layer 422 may cover entire electrode active material layer 112. More specifically, the contour of counter-electrode insulating layer 422 may overlap with the boundary between electrode active material layer 112 and electrode current collector 111.

Although FIG. 15 shows the variation of battery 1 according to Embodiment 1, electrode insulating layer 421 and counter-electrode insulating layer 422 may be applied to the battery according to each of the embodiments described above. In any cases, like battery 401, the possibility of a short circuit between electrode layer 110 and counter-electrode layer 120 can be considerably reduced, and thus it is possible to enhance the reliability of the battery.

### [Manufacturing Method]

Next, a method of manufacturing the battery according to each of the embodiments or the variations described above is described.

FIG. 16 is a flowchart illustrating an example of the method of manufacturing the battery according to each embodiment or each variation. The following describes a case of battery 1.

As shown in FIG. 16, first, multiple battery cells are prepared (S10, step (i)). For example, battery cells to be prepared are battery cells 100A, 100B, and 100C shown in FIG. 3A, FIG. 3B, and FIG. 3C, respectively.

Next, multiple battery cells 100 are stacked to form two types of parallel units (S20). More specifically, multiple battery cells 100 are stacked in turn so that the order of arrangement of electrode layer 110, counter-electrode layer 120, and solid electrolyte layer 130 is alternately reversed. In doing so, parallel unit 10A is formed by stacking even numbers of battery cells 100 so that counter-electrode layer 120 is located at the both ends of parallel unit 10A in the stacking direction. Parallel unit 10B is also formed by stacking even numbers of battery cells 100 so that electrode layer 110 is located at the both ends of parallel unit 10B in the stacking direction. Parallel unit 10A and parallel unit 10B are each formed by appropriately combining and stacking battery cells 100A, 100B, and 100C.

Next, insulating layer 40 is provided on the main surface of at least one of parallel units 10A and 10B (S30). For example, insulating layer 40 is provided on the main surface of counter-electrode current collector 121 of parallel unit 10A. Insulating layer 40 to be provided is, for example, an insulating adhesive material before curing. The providing of insulating layer 40 is performed using inkjet printing, spray printing, screen printing, gravure printing, or the like.

Next, parallel unit 10A and parallel unit 10B are stacked on opposite sides of insulating layer 40 (S40). After the stacking, insulating layer 40 is cured as needed. Steps S20 to S40 described above are an example of step (ii). In this manner, power generation element 10 which is a layered body of parallel units 10A and 10B is formed.

Note that, after multiple battery cells 100 are stacked, the side surface of power generation element 10 may be flattened. For example, power generation element 10 with flat side surfaces can be formed by collectively cutting the layered body of multiple battery cells 100. The flattening of the side surface may be performed for each of the parallel units. The cutting process is performed using knife cutting, laser cutting, jet cutting, or the like.

Next, an insulating layer is formed on the side surface of power generation element 10 (S50, step (iii)). More specifically, electrode insulating layer 21 for covering electrode layer 110 is formed at side surface 11. Counter-electrode insulating layer 22 for covering counter-electrode layer 120 is formed at side surface 12.

Electrode insulating layer 21 and counter-electrode insulating layer 22 are formed, for example, by applying and curing a fluid resin material. The applying is performed using inkjet printing, spray printing, screen printing, gravure printing, or the like. The curing is performed using drying, heating, light illumination, or the like depending on the resin material to be used.

Note that, in forming electrode insulating layer 21 and counter-electrode insulating layer 22, a protective member may be formed by masking a region where the insulating layer should not be formed using a tape or the like or by a resist process to prevent the end surface of counter-electrode current collector 121 and the end surface of electrode current collector 111 from being insulated. The protective member is removed after electrode insulating layer 21 and counter-electrode insulating layer 22 are formed. Accordingly, it is possible to ensure the conductivity of each of the current collectors.

Next, an extraction terminal is formed on the side surface of power generation element 10 (S60, step (iv)). More specifically, counter-electrode terminal 31 for electrically connecting multiple counter-electrode layers 120 is formed on side surface 11. Electrode terminal 32 for electrically connecting multiple electrode layers 110 is formed on side surface 12.

For example, counter-electrode terminal 31 is formed by applying and curing a conductive resin to cover electrode insulating layer 21 and a part of side surface 11 that is not covered with electrode insulating layer 21. Electrode terminal 32 is formed by applying and curing a conductive resin to cover counter-electrode insulating layer 22 and a part of side surface 12 that is not covered with counter-electrode insulating layer 22. Note that counter-electrode terminal 31 and electrode terminal 32 may be formed, for example, by printing, plating, evaporating, spattering, welding, soldering, bonding, or any other method.

Through the above processes, battery 1 shown in FIG. 1 can be manufactured.

Note that a process of pressing multiple battery cells 100 prepared in Step S10 in the stacking direction may be performed individually or after the stacking of the battery cells.

Moreover, after the forming of the extraction terminal (S60), sealing member 350 shown in FIG. 10 may be formed. Sealing member 350 is formed, for example, by applying and curing a fluid resin material. The applying is performed using inkjet printing, spray printing, screen printing, gravure printing, or the like. The curing is performed using drying, heating, light illumination, or the like depending on the resin material to be used.

### [Other Embodiments]

Although the battery and the method of manufacturing a battery according to one or more aspects have been described above based on the embodiments, the present disclosure is not limited to these embodiments. Embodiments obtained by performing various types of variations conceived by a person skilled in the art on the present embodiment and embodiments established by combining constituent elements in different embodiments are also included in the scope of the present disclosure without departing from the spirit of the present disclosure.

For example, although the above embodiments describe a case where the terminal electrode is provided on each of side surfaces 11 and 12, the terminal electrode may be provided on each of side surfaces 13 and 14. In other words, side surface 13 may be an example of the first side surface, and side surface 14 may be an example of the second side surface. The terminal electrode may be provided on each of: one of side surfaces 11 and 12; and one of side surfaces 13 and 14. In other words, the terminal electrode may be provided along each of two adjacent sides of main surface 15.

Moreover, for example, power generation element 10 may include three or more parallel units. In doing so, the current collector of the same polarity may be located at the uppermost layer and the lowermost layer of power generation element 10.

Note that the number of battery cells 100 included in parallel unit 10A and the number of battery cells 100 included in parallel unit 10B may be different from each other. Moreover, power generation element 10 may include three or more parallel units.

Moreover, for example, instead of insulating layer 40, battery cell 100 may be provided between parallel unit 10A and parallel unit 10B.

Moreover, for example, electrode insulating layer 21 has a part covering from the lowermost layer to the uppermost layer in the stacking direction along the side of side surface 11, but the present disclosure is not limited to this. In plan view of side surface 11, electrode insulating layer 21 may have only a part of the stripe shape. More specifically, at side surface 11, electrode insulating layer 21 may cover no counter-electrode layer 120 or no counter-electrode current collector 121. The same is true of counter-electrode insulating layer 22.

Moreover, for example, an external electrode may be formed on the topmost surface of each of the electrode terminal and the counter-electrode terminal using a method such as plating, printing, or soldering. With the external electrode provided for the battery, it is possible to further enhance the implementation of the battery.

Moreover, although the above embodiments describe a case where each battery includes both counter-electrode terminal 31 and electrode terminal 32, each battery may include only one of them. In other words, one of the positive electrode and the negative electrode of the battery may be extracted by a tab electrode.

Moreover, in the above embodiments, various changes, replacement, addition, omission, and the like can be performed in the scope of claims or a scope equivalent thereto.

### [Industrial Applicability]

The present disclosure can be utilized, for example, as batteries for electronic devices, electrical apparatuses, electric vehicles, and the like.

### [Reference Signs List]

1, 201, 301, 401 battery
10 power generation element
10A, 10B parallel unit
11, 12, 13, 14 side surface
15, 16 main surface
21, 421 electrode insulating layer
22, 422 counter-electrode insulating layer
31, 231 counter-electrode terminal
32, 232 electrode terminal
40 insulating layer
100, 100A, 100B, 100C battery cell
110, 110B electrode layer
111 electrode current collector
112 electrode active material layer
120, 120C counter-electrode layer
121 counter-electrode current collector
122 counter-electrode active material layer
130 solid electrolyte layer
350 sealing member
361 electrode contact
362 counter-electrode contact

## Claims

1. A battery comprising:
a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked;
a first insulating member covering an electrode layer among the electrode layers at a first side surface of the power generation element; and
a first terminal electrode covering the first side surface and the first insulating member, and electrically connected to a counter-electrode layer among the counter-electrode layers, wherein
the power generation element includes:
a first parallel unit that includes first battery cells among the plurality of battery cells and has both ends in a stacking direction at each of which a corresponding one of the counter-electrode layers is located; and
a second parallel unit that includes second battery cells among the plurality of battery cells, has both ends in the stacking direction at each of which a corresponding one of the electrode layers is located, and is stacked on the first parallel unit.

2. The battery according to claim 1, wherein
the first parallel unit is located at one of ends of the power generation element in the stacking direction, and
the second parallel unit is located at an other of the ends of the power generation element.

3. The battery according to claim 1 or 2, wherein
the power generation element includes an insulating layer located between the first parallel unit and the second parallel unit.

4. The battery according to any one of claims 1 to 3, wherein
when viewed from front of the first side surface, the first terminal electrode does not cover at least one of end portions of a counter-electrode layer among the counter-electrode layers in a direction orthogonal to the stacking direction, and
the first insulating member further covers the at least one of the end portions.

5. The battery according to any one of claims 1 to 4, wherein
at the first side surface, the first insulating member covers at least a part of a solid electrolyte layer among the solid electrolyte layers.

6. The battery according to claim 5, wherein
at the first side surface, the first insulating member covers from an electrode layer among the electrode layers to a part of a corresponding one of the counter-electrode layers along a stacking direction of the power generation element.

7. The battery according to any one of claims 1 to 6, wherein
at the first side surface, the first insulating member covers the electrode layer of each of the plurality of battery cells, and
the first terminal electrode is electrically connected to the counter-electrode layer of each of the plurality of battery cells.

8. The battery according to claim 7, wherein
in plan view of the first side surface, the first insulating member has a stripe shape.

9. The battery according to any one of claims 1 to 8, further comprising:
a second insulating member covering a counter-electrode layer among the counter-electrode layers at a second side surface of the power generation element; and
a second terminal electrode covering the second side surface and the second insulating member, and electrically connected to an electrode layer among the electrode layers.

10. The battery according to claim 9, wherein
the power generation element is a cuboid, and
the second side surface is opposite the first side surface.

11. The battery according to any one of claims 1 to 10, further comprising:
a third insulating member covering an electrode layer among the electrode layers at a third side surface of the power generation element; and
a third terminal electrode covering the third side surface and the third insulating member, and electrically connected to a counter-electrode layer among the counter-electrode layers.

12. The battery according to claim 11, wherein
the power generation element is a cuboid, and
the third side surface is adjacent to the first side surface.

13. The battery according to any one of claims 1 to 12, wherein
the electrode layer or the counter-electrode layer includes a current collector, and
a thickness of the current collector is less than or equal to 20 µm.

14. The battery according to any one of claims 1 to 13, wherein
the first insulating member includes a resin.

15. The battery according to any one of claims 1 to 14, further comprising:
a sealing member that does not cover at least a part of a main surface of the power generation element, and seals the power generation element.

16. A method of manufacturing a battery, the method comprising:
(i) preparing a plurality of battery cells each of which includes an electrode layer, a counter-electrode layer, and a solid electrolyte layer located between the electrode layer and the counter-electrode layer;
(ii) forming a layered body of the plurality of battery cells stacked in turn so that an order of arrangement of the electrode layer, the counter-electrode layer, and the solid electrolyte layer is alternately reversed;
(iii) covering an electrode layer among the electrode layers with an insulating member at one side surface of the layered body; and
(iv) covering the one side surface and the insulating member with a terminal electrode electrically connected to a counter-electrode layer among the counter-electrode layers, wherein
(ii) includes
forming: a first parallel unit that includes first battery cells among the plurality of battery cells and has both ends in a stacking direction at each of which a corresponding one of the counter-electrode layers is located; and a second parallel unit that includes second battery cells among the plurality of battery cells, has both ends in the stacking direction at each of which a corresponding one of the electrode layers is located, and is stacked on the first parallel unit.
